Europäisches Patentamt

(19) European Patent Office

Office européen des brevets

(11) Publication number: **0 210 528**
**A2**

## (12) EUROPEAN PATENT APPLICATION

(21) Application number: 86109653.5

(22) Date of filing: 14.07.86

(51) Int. Cl.⁴: **G11B 7/013** , G11B 7/007 , G11B 20/14

(30) Priority: 15.07.85 JP 155818/85

(43) Date of publication of application:
04.02.87 Bulletin 87/06

(84) Designated Contracting States:
DE FR GB

(71) Applicant: **Computer Services Corporation
No. 6-1, Nishishinjuku 2-chome
Shinjuku-ku Tokyo 160(JP)**

(72) Inventor: **Kimura, Fumio**
**6-1 Nishi-Shinjuku 2-chome Shinjuku-ku
Tokyo(JP)**
Inventor: **Hamasaki, Yukio**
**6-1 Nishi-Shinjuku 2-chome Shinjuku-ku
Tokyo(JP)**
Inventor: **Takahashi, Shunzo**
**6-1 Nishi-Shinjuku 2-chome Shinjuku-ku
Tokyo(JP)**

(74) Representative: **Baillie, Iain Cameron et al
c/o Ladas & Parry Isartorplatz 5
D-8000 München 2(DE)**

(54) Optical recording medium and method for writing data thereinto.

(57) This invention relates to an optical recording medium of a type wherein data is written by forming a pattern of changes in optical properties and a method for writing the daata into the recording medium.

This invention features an optical recording medium wherein a region defined by reference lines is formed as a data recording retion, a plurality of data tracks are laid perpendicularly to the reference lines and distribution of changes in optical properties in the width direction of the reference lines is formed different from that of the pattern of changes in optical properties to be used for data recording.

This invention further feataures a method for writing data wherein the data is encoded into a binary code by the FM encoding system, one data bit of one data train to be entered into the recording retion is used as a parity bit and the parity of the data train is set as an even parity when the number of the dat bits of one data train is odd and as an odd parity when the number of the data bits of one data train is even.

## Fig. I

# OPTICAL RECORDING MEDIUM AND METHOD FOR WRITING DATA THERETO

## 1. Field of the Invention

This invention relates to an optical recording medium and method for writing data into the recording medium of a type which is adapted to write data by providing a plurality of data tracks in an optical recording region and forming paterns formed of changes in optical properties corresponding to a digital information to be written in the tracks.

## 2. Prior Art and Object of the Invention

An optical recording medium has recently been developed, as an alternative of existing magnetic media, which writes data through formation of patterns of changes in optical properties, for example, patterns consisting of bright and dark domains, corresponding to digital information to be recorded. An optical recording medium of this type can advantageously assure high recording density and large recording capacity. If such high recording density and large recording capacity come true, data which has been stored in magnetic tapes and magnetic disks can now be stored within a sheet of recording medium of such a size as an existing magnetic disk card.

In the development of a recording medium, it is essential, for wide application thereof, to economically produce a writing/reading apparatus, especially a reading apparatus.

For disk type media, a reading apparatus for optical recording medium applicable practically has already been developed. For instance, there has been provided a reading apparatus which irradiates light beam such as laser beam along a spiral track formed on the surface of the medium as in an existing music record and it senses beam reflected from the track to read the data written in the track.

However, application of this method to such a medium formed like a card, which is not suitable for writing and reading of data through revolution of medium because of its straight tracks, involves problems and practical use of such a medium is still on the way of development.

More particularly, in the case of a recording medium of non-revolution type like a card type optical recording medium, data is recorded, for example, in such a manner that many data tracks are laid in a rectangular recording region and optical bright and dark patterns corresponding to a digital information to be recorded are formed in the tracks. By this reason, the write and read heads should be controlled for movement in the X-Y directions in such a case that data is written or read by a light beam of single spot. This inevitably necessitates complicated moving mechanism and control mechanism.

It is, of course, possible to use a linear or planar reading element such as a CCD linear sensor etc. to overcome such a problem. Such a linear sensor is capable of reading, at a time, the data stored in one or more tracks. Therefore, themechanical movement required for the sensor can be reduced, but this linear sensor involves another problem as will be described below.

A positioning error or angular deviation, whatever small it may be, will result in a reading error in the data reading by the CCD linear sensor from the high density and large capacity recording medium. Therefore, a reading apparatus is required to have means for tentatively suspending data reading when the positioning error or angular deviation is detected and means for instructing reloading of the card or automatically correcting the position of the card on the basis of a detection signal.

However, detection and/or correction of such minute positioning errors by the sensor again requires very complicated and sophisticated detection mechanisms and control mechanisms. It may be possible in technology to make such detection and correction, but the apparatus itself becomes very expensive due to such complicated mechanisms, which will become a bottleneck for popularization of the reading apparatus. The present invention therefore propose a solution of the problems.

It is therefore a first object of the present invention to provide an optical recording medium which is provided with a criterion of positioning for detecting a positioning error and an angular deviation by a read head of a reading apparatus and capable of omitting a special complicated and sophisticated detection mechanism and control mechanism.

Data is encoded into binary code prior to writing the data into the optical recording medium as described above and then entered into the recording medium after conversion, for example, into bright and dark patterns.

For instance, a plurailty of reference regions (hereinafter referred to as reference lines) having a predetermined width are provided at predetermined intervals on an effective recording region on the card type recording medium. The region defined by these reference lines is used as a data recording region and data is written in the width direction of this data recording region. In this case, data is written while being divided into a length corresponding to the width of the data recording region.

This way of data writing into the recording medium as described above assures easy and accurate positioning of a data writing or reading dhead. Thus, this way is suitable for high density and large capacity recording in the form of very fine patterns as in an optical recording medium.

However, since the entry region is defined between the reference lines in this data writing method, special patterns should be entered for discrimination at the boundaries between the reference lines and the entry region to discriminate the ends of a data train from the respectively corresponding reference lines. By this reason, special patterns should be selected according to the binary codes at both ends of the data. Thus, the data processing will inevitably be complicated. However, these speical patterns are effective only for discrimination of boundaries and are not applicable for a parity check. Therefore, additional means is further necessitated for parity check etc. This is disadvantageous in that the data entry retion is narrowed as much as the area necessitated for entry of special patterns. The present invention is proposed to solve such disadvantages, too.

It is therefore another object of the present invention to provide a method for writing data into a recording medium which does not require complicated data processing such as entry of special patterns, allows effective use of the entry region and easy discrimination between both ends of the data train and the reference lines and also allows chech for a prity error.

## SUMMARY OF THE INVENTION

The present invention features an optical recording medium for writing data therein adapted to set a plurality of data tracks in an optical recording region so as to allow a pattern of changes in optical properties to be formed according to digital data to be written, which medium is characterized in that reference lines having a predetermined width are fromed in said optical recording region to define data recording regions between said reference lines; a plurality of data tracks are provided perpendicularly to said reference lines within said data recording region, and distribution of changes in optical properties in the width direction of said reference lines are provided in a manner different from the pattern of changes in optical properties to be used for data recording.

The present invention further features a method for writing data in unit of a data train of a predetermined length into a recording region defined on a recording medium, which comprises: encoding data into a binary code according to the FM encoding system; setting one data bit of one data train to be entered into the recording region as a parity bit; and setting a parity of the data train to an even parity when the number of data bits in one data train is odd and to an odd parity when the number of the data bits is even.

## OPERATIONAL EFFECT

The first feature of the present invention sets reference lines in the optical recording region to provide a region defined by the reference lines as a data recording region. With this arrangement, data region can be sesily discriminated from the remainning regions and the reference lines can function as guide lines for the movement of a linear or planar sensor such as a CCD linear sensor.

Moreover, data of one or several tracks can be read at a time by the linear or planar sensor by setting, within the data recording region, a plurality of data tracks perpendicular to the reference lines. On this occasion, positioning error or angular deviation between the sensor and the recording region can be detected easily by also reading the reference lines by the linear or planar sensor.

Therefore, it is no longer required to move a read head in the direction of the track during the data reading from one data recording region and the head is only required to move in parallel along the reference lines while the reference lines on the recording region are detected. Thereby, the head moving mechanism can be simplified and a specially designed sensor is not required for positioning.

Moreover, the data written in the tracks can be eaasily discriminated from the reference lines by forming distribution of changes in optical propertieds in the width direction of the reference lines in different way from the pattern of changes in optical properties to be used for recording of the data.

There are variety of patterns of changes in optical properties to be used for the data recording. The FM encoding system is a typical example. In the present invention, the reference lines are formed so that the status of "0" or "1" are continued by defining the end portions of the respective reference lines in the width direction thereof for easily discriminating them from the binary coded pattern of data on the basis of the FM encoding system. Accordingly, the position of the reference lines can be set distinctively and positioning can be done easily by checking the pattern of the data read by the reading apparatus.

Operational functions of the second feature of the present invention will now be described.

In the FM encoding system employed in the second feature of the present invention, the data of one bit is encoded into binary code in terms of a set of several adjacent recording units which are each a minimum physical recording unit for recording the data on a recording medium. One data bit is usually formed of two adjacent minimum recording unit. For example, "0,0" or "1,1" indicates data "0", while "0,1" or "1,0" indicates data "1". Therefore, even if 0 or 1 continues in data, the continuous 0 or I can be distinctively indicated by alternatingly utilizing the respective patterns.

The present invention discriminates the reference line, which is usually written in the form of continuous "0" or "1" from the data region. In this connection, it is to be noted that the distinction is sometimes difficult at the boundaries between the reference lines and the data region as described above. The present invention therefore contemplates discrimination between the reference lines and the data region even at the boundaries therebetween. The principle of the discrimination according to the present invention will be described hereunder.

First, the minimum recording unit is called half bit in the FM encoding system as explained before. The number of the half bit becomes 2n which is 2 times the number of data n (n is a natural number except 0) in case n data exist in one data train. Therefore, a value $B(n)$ of the nth data bit indicates "0" or "1" in the combination of two adjacent half bits.

This relation can generally be expressed by the following formulae using the symbol $\oplus$ as the logical operation system of exclusive OR. In the formulae, n indicates the number of data bits to be written into a single line (column).

$$B(n) = b(2n-1) \oplus (b(2n)) \quad \ldots\ldots\ldots\ldots\ldots\ldots\ldots (1)$$
$$\text{Where, } 0 < n \leq m$$

$$b(2n) = \overline{b(2n+1)} \quad \ldots\ldots\ldots\ldots\ldots\ldots\ldots (2)$$
$$\text{Where, } 0 < n \leq m$$

In this connection, it is assumed that a certain bit in one data train is designated as a parity bit. In this case, the exclusive OR operation of all bits of pertinent data results in the relation indicated by the following formula. AP indicates an odd parity, while EP indicates an even parity throughout the specification.

$$B(1) \oplus B(2) \oplus \ldots\ldots\ldots \oplus B(n) = \begin{cases} 1 & (AP) \\ 0 & (EP) \end{cases}$$

This relation can be converted as follows by introducing the formula (1).

$$b(1)\oplus b(2)\oplus b(3)\oplus\ldots\ldots\oplus b(2n-1)\oplus b(2n)$$

$$=\begin{cases}1 & (AP)\\ \\ 0 & (EP)\end{cases}\qquad\ldots\ldots\ldots\ldots\ldots (3)$$

Above formula (3) is deformed as indicated below.

$$b(1)\oplus\{b(2)\oplus b(3)\}\oplus\{b(4)\oplus b(5)\}\ldots\ldots\ldots$$

$$\ldots\ldots\ldots\oplus b\{b(2n-2)\oplus b(2n-1)\oplus b(2n)$$

$$=\begin{cases}1 & (AP)\\ \\ 0 & (EP)\end{cases}\qquad\ldots\ldots\ldots\ldots\ldots (4)$$

The formula (4) can be further transformed as indicated below from the relation of the formula (2) because the components within { } becomes "1" from the nature of exclusive OR operation.

$$b(1)\oplus 1\oplus 1\oplus\ldots\ldots\ldots\oplus 1\oplus b(2n)=\begin{cases}1 & (AP)\\ \\ 0 & (EP)\end{cases}\qquad\ldots\ldots\ldots (5)$$

Using the relation $(1+)^i = 1+1+1+\ldots\ldots+1+1$, the formula (5) can be transformed as indicated by the following formula (6).

$$b(1)\oplus(1+)^i b(2n)=\begin{cases}1 & (AP)\\ \\ 0 & (EP)\end{cases}\qquad\ldots\ldots\ldots\ldots (6)$$

Here, it is obvious

$$(1\oplus)^i =\begin{cases}0\oplus & (i=2j;\quad j\text{ is a natural number})\\ \\ 1\oplus & (i=2j-1;\ j\text{ is a natural number})\end{cases}\qquad\ldots\ldots (7)$$

Therefore, the left side of formula (4) can be transformed as expressed by the formula (8).

$$b(1)\oplus\{b(2)\oplus b(3)\}\oplus\{b(4)\oplus b(5)\} \quad \ldots\ldots\ldots$$

$$\ldots\ldots\oplus b\{b(2n-2)\oplus b(2n-1)\oplus b(2n)$$

$$= \begin{cases} b(1)\oplus 0\oplus b(2n) & (n=2k \quad : \ k \ \text{is natural number}) \\ & \qquad\qquad\qquad\qquad\ldots\ldots\ldots(8) \\ b(1)\oplus 1\oplus b(2n) & (n=2k-1: \ k \ \text{is natural number}) \end{cases}$$

According to formula (8), it is understood that matching between the heading half bit and the trailing half bit of the data train can be obtained by adequately setting even or odd number bits of data train to be entered to a single line (column) and the parity of data train.

In this case, even or odd number of bits of the data train to be entered into a single line is determined in combination with the mode of recording medium. The reference regions which define the data recording region are formed as continuation of either "0" or "1" and therefore such regions can also be determined in combination with setting of mode of the recording medium. In addition, the heading half bit of data train is set to "1" or "0" so that it is opposed to "0" or "1" of the reference lines; which define the data recording region.

Therefore, matching between the heading half bit and the trailing half bit of the data train can be established at the time of data entry only by setting one bit of data to be entered into a single line as the parity bit and also setting the parity of the data in such a manner as satisfying the formula (8). As a result, the boundary between the data and the reference lines can be defined obviously without entering the identification code consisting of special pattern.

BRIEF DESCRIPTION OF THE DRAWINGS

Fig.1 is a plan view of a first embodiment of an optical recording medium of the present invention;

Fig.2 is an enlarged plan view of essential part of the embodiment;

Fig.3 is a waveform which represents reflectivity patterns of reference line and data in the embodiment;

Fig.4 is a block diagram of a formation of a reading apparatus employable for reading data from the optical recording medium of the embodiment;

Fig.5 is a waveform diagram representing the relation between a video signal generated from a read sensor and a reference line sensing signal;

Fig.6 is an explanatory view showing the relation between the sight of the read sensor and the data recording region;

Fig.7 is an enlarged plan view of a second embodiment of optical recording medium of the present invention;

Fig.8 is a waveform diagram showing the relation between the trailing edge of a dummy bit in the second embodiment;

Fig.9 s a block diagram of a data writing apparatus employable for implementing the data writing method of the second embodiment; and

Fig.10 is a waveform diagram showing the data encoded by the FM encoding system.

DESCRIPTION OF THE EMBODIMENTS

Preferred embodiments of the present invention are explained with reference to the accompanying drawings.

The embodiments explained below are adapted for a card type optical recording medium and more particlularly an optical recording mediam of the type wherein a difference in relfectivity is employed as changes in optical properties and data is read in accordance with an extent of reflectivity.

(First Embodiment)

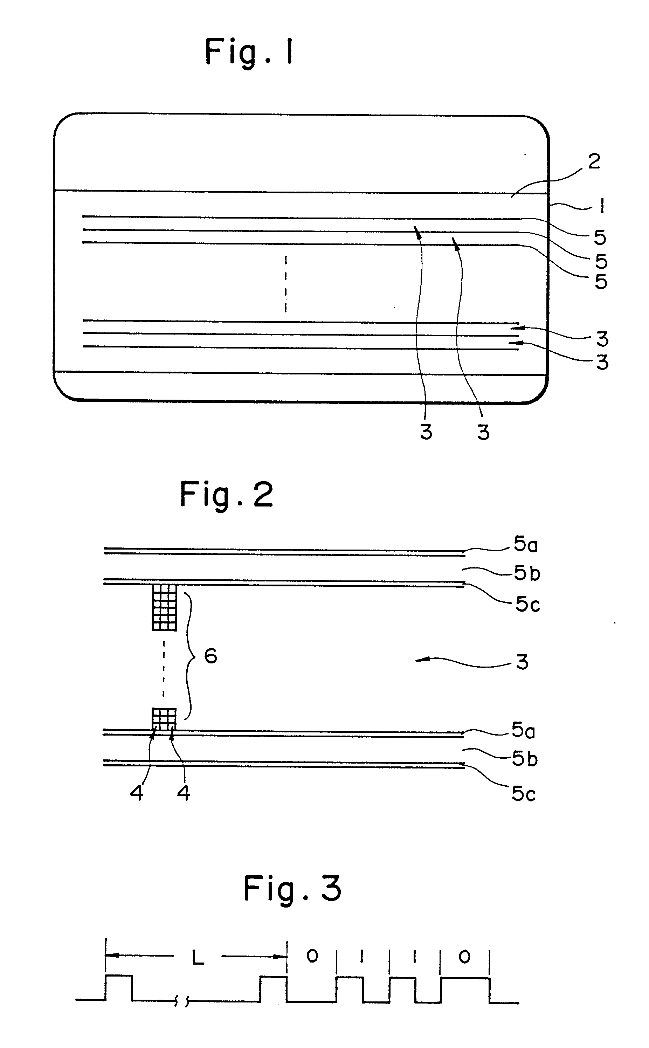

An optical recording medium of the first embodiment shown in Fig.1 is formed, for example, by providing an optical recording region 2 onto a plastic board 1 of such a size as a name card and also providing a plurality of reference lines at constant intervals in the longitudinal direction of such an optical recording region 2.

The optical recording region 2 is formed of a material which allows entry of binary-coded information in the form of bright and dark patterns when such material is irradiated, for example, by a light beam such as laser beam etc. when it shows local changes in optical properties like reflectivity or others (reflectivity, in the case of this embodiment) through the photographic technology. As an example of such material, there may be employed substances which fuse only within the limited area when they are irradiated by light beam and change their reflectivity or photosensitive substances. This optical recording region 2 may be formed by direct deposition onto the board 1 or by attachment of the region formed in a film.

A reference line 5 is formed in a strip having a constant width. In this embodiment, it is formed so as to extend in its longitudinal direction. Interval of the reference lines can be set adequately to such a distance as can assure reading thereof at a time by a CCD sensor.

The reference line 5 can be formed synchronously with entry of data or can be formed previously in asynchronization by various methods in accordance with material etc. of the optical recording region 2. For example, it can be formed together with data or individually by the photographic technique or printing technology at the time of forming the optical recording region 2. It is also possible to enter such a reference line by irradiating the optical recording region 2 by a laser beam.

The region defined. by the reference lines 5 serves as the data recording region 3. In this data recording region 3, a plurality of data tracks 4 are formatted perpendicular to the reference lines 5. These data tracks 4 are composed of a plurality of recording cells 6 which each form a minimum unit of bright and dark patterns. Data is recorded within this recording cell 6.

In the simplest sense, a single recording cell represents one bit in the recording of the data by this recording cell 6, but in the case of this embodiment, one bit of the data is expressed by a couple of continuous recording cells because the data is encoded into a binary code by the FM encoding system. More particularly, as shown in the right portion of the waveform diagram in Fig.3, the continuous two recording cells of "0,0" or "1,1" indicate data "0", while the data cells of "0,1" or "1,0" indicate "1". Accordingly, since a single recording cell forms half of the data of one bit, one recording cell is sometimes called half bit in the follwing description.

Each reference line 5 has such a format as the width L is sufficiently longer than the length of one bit of data and reflectivity pattern in the width direction can be easily discriminated, as shown in Figs.2 and 3, from the reflectivity pattern of data. In other words, the both sides 5a, 5c in the width direction are set corresponding to one bit of recording cells used for recording of data and keeps high reflectivity, while the intermediate part 5b in the width direction is set equal to several times the recording cells (2 bits in the present embodiment) required for expressing one digital bit of data and keeps low reflectivity.

Operational functions of the first embodiment thus configured are explained mainly focusing on the operation for reading the data written into the recording region.

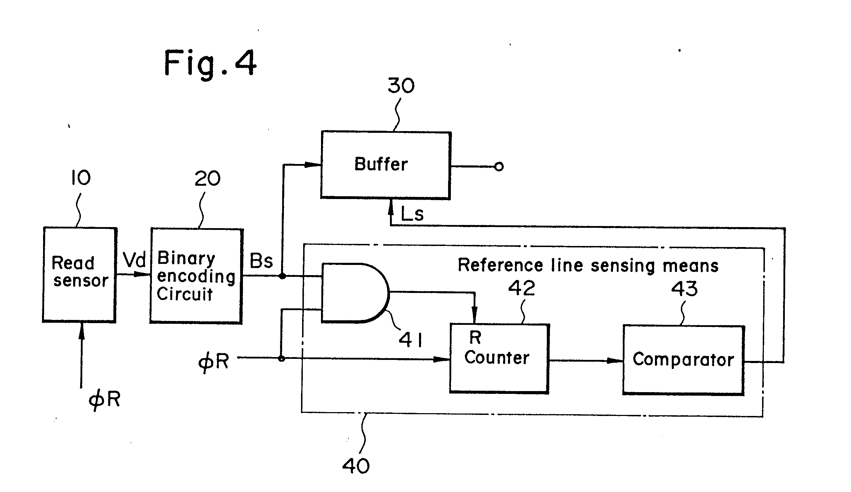

Prior to the explanation, the reading apparatus for reading the data recorded into the opticaal recording medium of the present invention is first outlined with reference to Fig.4.

The optical recording medium reading apparatus shown in Fig.4 comprises, as main components, a read sensor 10 which reads the data by tracking the track 4 in the data recording region 3 shown in Fig.2, a binary encoding circuit 20 which encodes an output video signal of the read sensor 10 into binary code, a buffer 30 which tentatively stores the binary encoded signal $B_s$, and a reference line sensing means 40 which senses the reference lines 5 from the binary encoded signal $B_s$. The optical recording medium reading apparatus also provides, in addition to the main components, a movement control apparatus, a synchronous signal generating circut, a light source and an output data processing apparatus (not shown). These are. however, not directly related to the operational functions of this embodiment and are not explained here.

The read sensor 10 is composed, for example, of a CCD linear sensor and photodetectors are arranged for detection within the range which is longer than the width of data recording region 3 of optical recording medium. The photodetectors are arranged with the interval for arrangement corresponding to the recording cells 6 of a track in such a number as two times the number of cells, for example, in 1024 elements in the case of this embodiment.

The read sensor 10 reads the data by serially providing charges stored in proportional to the amount of light received by each photodetector in accordance with the synchronous signal $\phi R$. The output thereof becomes a video singal $V_d$ for each track.

The binary encoding circuit 20 is formed by a comparator which compares the video signal $V_d$ with a predetermined threshold level and provides an output a binary encoded signal $B_s$ after defining the waveform portion higher than the threshold level as high level, while the portion lower than the threshold level as low level.

The buffer 30 is composed of an input/output control gate and a register. This buffer circuit alternatingly opens or closes the control gates in the input side and output side in accordance with the reference line sensing signal $L_s$ described in detail later to store the binary encoded signal $B_s$ and also outputs the stored binary encoded signal $B_s$.

The reference line sensing means 40 comprises an AND gate which samples the high level portion of the binary encoded signal B $_s$ output from the binary encoding circuit 20 in synchronization with the synchrounous signal $\phi$R, a counter 42 which is reset by an output of the AND gate circut 41 and counts up the synchronous signal $\phi$R, and a comparator 43 compares a counted value output from the counter 42 with a time width set previously and provides the reference line sensing signal $L_s$ when the counted value is larger than the preset time width.

This preset time width value is set by setting the width of the reference line to be detected in terms of a number of synchronous signals $\phi$R corresponding to the time required for reading data by the read sensor 10. In the case of this embodiment, it is set to the synchronous signal $\phi$R as many as 40 pulses. This value is set substantially fixed.

Operational functions of the embodiment of the reading apparatus thus configured will now be described.

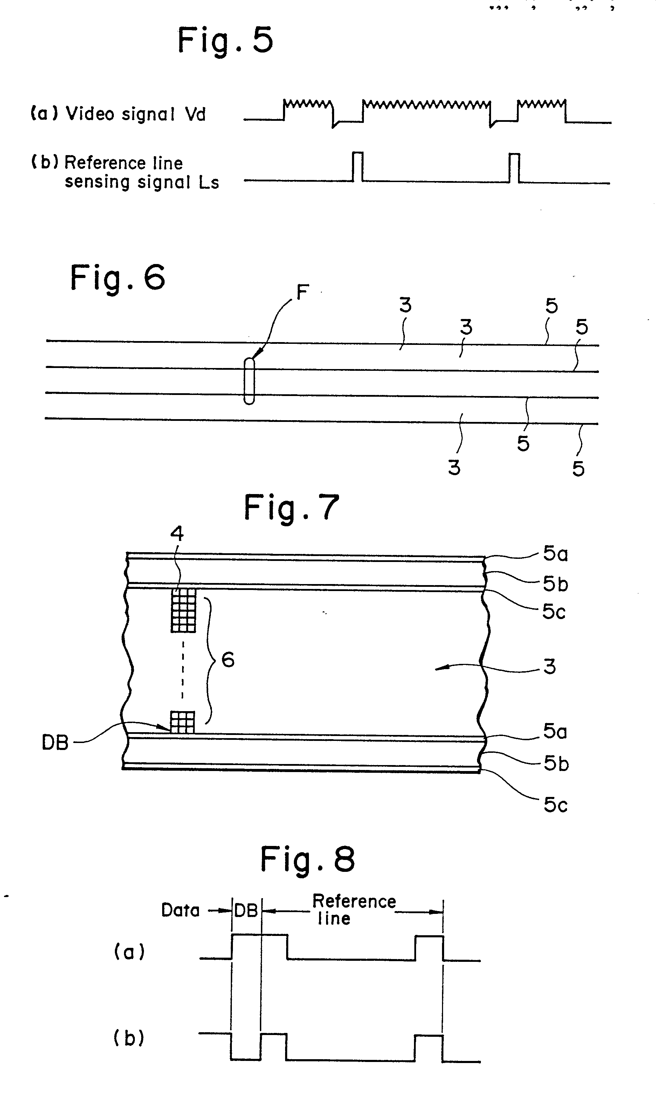

To read the data from the optical recording medium, the read sensor 10 is placed closely onto the track of the data recording region 3 from which data should be read in cooperation with the movement control mechanism not shown. This apparatus causes the read sensor 10 to start the reading operation. The read sensor 10 serially transfers charges accumulated in the photodetectors as the video signal $V_d$ shown in Fig.5(a), using the synchronous signal $\phi$R sent from the synchronous signal generating circuit not shown. This video signal $V_d$ is encoded into the binary code in the binary encoding circuit 20.

When the data of one track is read as described above, the read sensor 10 is moved to a next track by the movement control apparatus and reads again the data substantially in the same way as described above.

The read sonsor 10 moves along the data recording region 3 on the optical recording medium 2 and reads data in band by band. The read sensor 10 covers at a time a range as wide as about two data recording regions 3 with its sight F. In this case, the sight F always covers two reference lines 5.

The binary encoded signal $B_s$ output from the binary encoding circuit 20 is sent to the buffer 30 and the AND gate circuit 41.

The buffer 30 stores the binary encoded signal $B_s$ , when the gate is opening, with the reference line sensing signal $L_s$ described in detail later byt rejects it to store when the gate is closing.

On the other hand, the synchronous signal $\phi$R is also input to the AND gate circuit 41 together with the binary encoded signal $B_s$. Therefore, the AND gate circuit 41 outputs a pulse synchronized with the synchronous signal $\phi$R when the binary encoded signal $B_s$ is in the high level.

The counter 42 is reset by an output pulse from the AND gate circuit 41. This counter 42 counts up the synchronous signal$\phi$R and newly counts again for each reset. Therefore, the counter 42 accumulates the counted values, in case output as the binary encoded signal $B_s$ is continuously in the low level, but is reset immediately and does not accumulate the value in other cases.

The comparator 43 compares a counted vlue of counter 42 with the time width set previously. If a counted value reaches such a preset time width value, the comparator 43 outputs the reference line sensing singal $L_s$ in such a timing. The reference line sensing signal $L_s$ falls, as shown in Fig.5(b), when the video signal $V_d$ rises up to the high level region from the low level region.

This reference line sensing signal $L_s$ is sent to the buffer 30, wherein the input gate opens while the output gate closes by the first reference line sensing signal $L_s$.

Thereafter, as shown in Fig.5(a), since the counter 42 is always reset in such a region where the high and low levels appear alternately at short intervals, a counted value does not reach the preset time width.

When the level of signal continues the second low level region, as explained above, this counted value of the counter 42 reaches the preset time width, outputting the reference line sensing signal $L_s$.

This reference line sensing signal $L_s$ is sent to the buffer 30, wherein the input gate is closed and the output gate is opened by the second reference line sensing signal $L_s$.

As a result of this, only the data from the track to be read can be extracted from an output of the read sensor 10 together with the two reference lines, data of the track defined by the referece lines and a part of the data of the track located outside of the two reference lines. Therefore, if the sight F of read sensor 10 deviates a little to the upper or lower side (track direction), data can be read accurately without minute and complicated correction of positioning.

Moreover, a positioning error or angular deviation can be detected from a time width up to the position of reference linees from the video signal readt starting time.

(Second Embodiment)

An optical recording medium of the second embodiment shown in Fig.7 is substantially the same as the first embodiment in configuration, except for an interval of the reference lines.

The interval of the reference lines 5, which is only one difference between the first and the second embodiment of the optical recording medium, can be set as desired but should be within the length which can be covered at a time by the CCD sensor. In the case of this embodiment, the interval of the reference lines is set to a length which is longer than the data to be entered as long as one track by at least the bright or dark minimum unit forming the bright or dark pattern, namely by one memory cell.

Such extra memory cell 6 is provided at the trailing edge side of data of track 4 and serves as a dummy bit DB. In the case of this embodiment, since the memory cell 6 serving as the dummy bit DB is provided for comparison so that the reflectivity becomes low because the opposite sides 51, 5c of the reference lines 5 show high reflectivity as described before.

The operational function of the second embodiment will now be described. In this connection, it is to be noted that the operational function of this embodiment is similar to that of the first embodiment, except for the setting of the dummy bit. Therefore, only the difference is explained here.

The dummy bit DB for adjustment as described above is set to the high level, namely to "1" as shown in Fig.8(a) when the final data terminates in the low level in the case of writing data to each track. Meanwhile, when the final data terminates in the high level, it is set to the low level, namely to "0" as shown in Fig.8(b). This setting is carried out simultaneously with the data entry.

Since the dummy bit DB is provided to each track as explained above, the trailing edge of the data of each track can be distinctively discriminated from the reference lines.

The second embodiment employs such a configuration by the reason as described below. If changes in optical properties (for instance, reflectivity) of the side portions of the reference lines and the trailing edge of the data are in the same level at the boundary of them, discrimination of the boundary becomes sometimes unclear. Of cource, discriimination does not become impossibel but a complicated electrical circuit is required for discrimination. It is a serious disadvatage of this embodiment.

In this case, such disadvatage can be covered by certainly setting heading portion of data to the level different fromthat at the side portions of reference lines. However, the trailing edge of data can not be fixed to one level because it is varied with the contents of the data. Therefore, the level at the trailing edge of the data becomes equal to that at the side portions of the reference lines and thereby the trailing edge of the data can not be discriminated clearly in some cases.

For this reason, in the second embodiment, the interval of the reference lines is set longer than one track of the data to be entered by at least a length corresponding to the minimum unit of the changing condition (for example, bright or dark forming a bright and dark pattern) forming the pattern of changes in optical properties. Thereby, the adjusting bit can be incorporated between the trailing edge of the dataa and the side portion of the reference lines. As a result of this, the trailing edge of the data can be discriminated obviously by setting the adjusting bit area to the level different from that at the trailing edge of the data.

(Third Embodiment)

An embodiment wherein the data entry method of the second embodiment of the present invention is applied to the optical recording medium shown in Figs.1 and 2 will now be described.

In this embodiment, the tracak 4 is set to such a length as arranging 128 recording cells 6. In the case of the recording cells at the heading edge and trailing edge, the outsides are respectively connected with the reference lines 5.

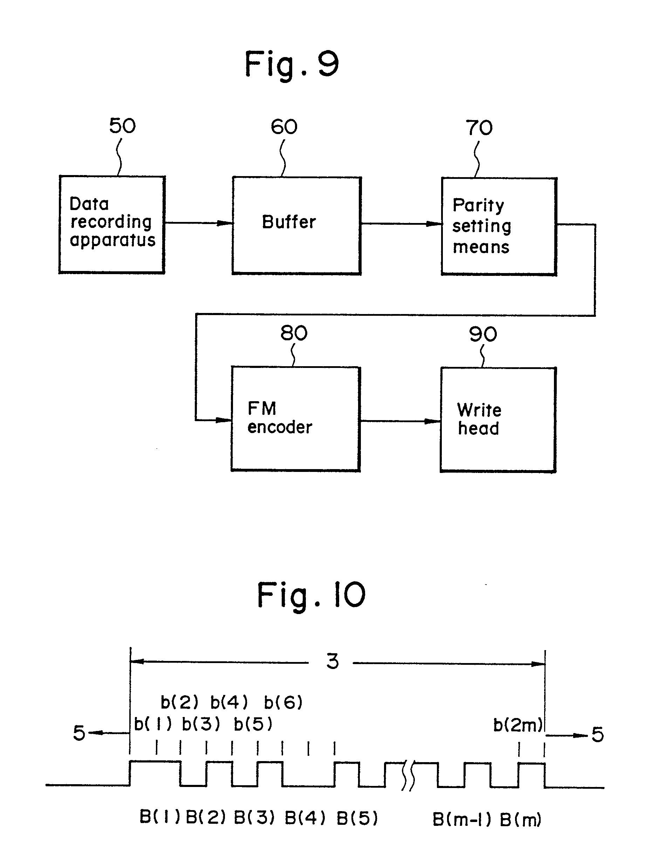

An example of the data writing apparatus for carrying out the data writing method of this embodiment will be described referring to Fig.9.

The data writing apparatus shown in the same figure comprises a data recording apparatus 50 which is recording the data to be written, a buffer 60 which extracts the data of one line from the recording apparatus 50 and tentatively stores it, a parity setting means 70 which searches parity of the data extracted and writes the data to the parity bit so that it becomes the predetermined parity, an FM encoder 80 for FM encoding of the data and a write head 90 which writes the FM encoded data into the optical recording medium.

The data writing method of the third embodiment for writing the data to the optical recording medium having the structure as described above using the data writing apparatus will bw described hereunder.

The data to be written is read from the data recording apparatus 50 as the data train matching the width of the dat recording region 3, namely the length corresponding to the track 4 and it is then stored in the buffer 60. In the case of this embodiment, the length of the data train, namely the number of the data bits is 64 which is equal to 1/2 of the half bits because the width of the data recording region 3 is set to the length allowing arrangement of 128 half bits (recording cells). Of these data bits, only one bit is used a parity bit and therefore 63 bits can be used for data recording.

The parity setting means 70 seraches the parity of the data and set the data of one bit to the parity bit so that the preset parity can be obtained. This parity bit can be provided anywhere desired in the data.

As explained above, i becomes an odd number in the conditional expression of the formula (7) above because 64 data bits (even number) are provided in this embodiment. Moreover, the half bits of the heading and trailing edges must respectively be set to "1" because the reference lines are set to the state "0". For this purpose, the right side of the formula (8) is required to be (1) + 1 + b-(2n) = 1.

Accordingly, the dat train should preferably be an odd parity in the case of this embodiment as shown in the formula (6).

After the parity setting means 70 sets the parity, the data is subjected to the FM encoding at the FM encoder 80. As shown in Fig.4, one bit of the data can be expressed by two adjacent half bits in the FM encoding.

The half bits are combined according to the conditions of the formula (1). When the data are sequentially encoded in the combination of the half bits, two half bits are combined so as to satisfy the conditions of the formula (2) to enable discrimination of the digital value of the adjacent data bits from each other. Tfhe half bits at the heading and the trailing edge of the data are set to always be "1" for discrimination from the reference lines 5.

The FM encoded data is set to the write head 50 and is then entered to the data recording region of optical recording medium.

As described before, the data can be read from the optical recording medium storing the data, for example, by the reading apparatus comprising a read sensor such as a CCD linear sensor.

In this case, the read sensor is first positioned with reference to the reference lines and the data is read together with the reference lines. The state in continuation of "0" is discriminated from the data read and it is eliminated. In this case, since the half bits of the heading and trailing edge of the data are "1", disregarding the contents of the data, these can be obviously discriminated from the reference regions.

Upon reading of the data of a single line, a parity check is carried out for the data concerned. In this embodiment, an odd parity indicates that there is no read error.

In this embodiment, the parity bit formed of one bit is provided as described above for a predetermined parity. Thereby, the boundary between the reference lines and the data can be discriminated distictively without providing the discrimination code of a special pattern and a parity check can also be carried out concurrently.

(Modification of Embodiments)

In the first and the second embodiment, the width direction reflectivity pattern of the reference lines is formed as "100 .. ..001". However, the pattern is not limited to this and any other pattern may alternatively be employed. For example, the pattern may be "011 .. .. 001".

Although a card type optical recording medium is used in the foregoing embodiments, it is not limited thereto and it may be a sheet type or tape type medium.

In the foregoing embodiments, the data is recorded by utilizing a difference in reflectivity, but changes of another optical property such as transmittance or polarization, etc. may be utilized for data recording.

In addition to the modifications as described above, a dummy bit provided at the trailing edge of the track in the second embodiment may alternatively be provided to the heading edge of the track. When it is provided to the heading edge, a level of the heading edge of the data can be set independently of the reference lines, which is convenient. Furthermore, although the dummy bit is formed by one bit corresponding to a minimum unit of a bright and dark pattern in the embodiments, it may be formed of a plurality of bits.

In the third embodiment, the reference lines is set to "0" whle the heading and the trailing edge of the data train are set to "1", but these may be inverted.

In the third embodiment, the even number of data bits are used, it is, of course, possible to use the odd number of data bits can be used. In these modifications, a parity is set in such a manner as to satisfy the conditions of the formula (8).

**Claims**

1. An optical recording medium for writing data therein adapted to set a plurality of data tracks in an optical recording region so as to allow a pattern of changes in optical properties to be formed therein, according to digital data to be written, which medium is characterized in that reference lines having a predetermined width are formed in said optical recording region to define data recording regions between said reference lines; said data tracks are provided perpenducularly to said reference lines within said data recording reggion; and distribution of changes in optical properties in the width direction of said reference lines are provided in a manner different from that of the pattern of changes in optical properties to be used for data recording.

2. An optical recording medium according to calim 1, wherein said reference lines has an interval set longer than a length of one track of the data to be entered by at least a length corresponding to a minimum unit of changing condition to form the pattern of changes in the optical properties.

3. An optical recording medium according to claim 2, wherein a dummy bit formed of a minimum unit of the changing condidtion is provided at the trailing edge of the track.

4. An optical recording medium according to claim 2, wherein a dummy bit formed of a minimum unit of the changing condition is provided at the heading edge of the track.

5. An optical recording medium according to claim 1, 2, 3 or 4, wherein a difference of reflectivity is employed as a change in the optical properties so as to allow data to be read from changes in reflectivity.

6. An optical recording medium according to claim 1, 2, 3 or 4, wherein the optical recording medium is of a card type.

7. An optical recording medium according to claim 1, 2, 3 or 4, wherein the distribution of changes in the optical properties in the width direction of the reference lines is formed as "100 .. .. 001".

8. An optical recording medium according to claim 1, 2, 3 or 4, wherein the distribution of changes in the optical properties in the width direction of the reference lines is formed as "011 .. .. 110".

9. A method for writing data in unit of data train of a predetermined length into a recording region defined on a recording medium, which comprises:

encoding the data into a binary code according to the FM encoding system;

setting one data bit of one data train to be entered into said recording region as a prity bit; and

setting a prity of the data train to an even parity when the number of the data bits in one data train is odd and to an odd parity when the numbe of the data bits is even.

10. A method for writing data according to claim 9, wherein said recording medium is of a card type.

# Fig. 1

# Fig. 2

# Fig. 3

# Fig.4

0 210 528

# Fig. 5

(a) Video signal Vd

(b) Reference line
    sensing signal Ls

# Fig. 6

# Fig. 7

# Fig. 8

Data → DB | Reference line

(a)

(b)

# Fig. 9

```
   50              60              70
  ┌─────────┐    ┌─────────┐    ┌─────────┐
  │ Data    │    │         │    │ Parity  │
  │recording│──→ │ Buffer  │──→ │ setting │───┐
  │apparatus│    │         │    │ means   │   │
  └─────────┘    └─────────┘    └─────────┘   │
  ┌───────────────────────────────────────────┘
  │   80              90
  │ ┌─────────┐    ┌─────────┐
  │ │ FM      │    │ Write   │
  └→│ encoder │──→ │ head    │
    └─────────┘    └─────────┘
```

# Fig. 10